# EUROPEAN PATENT SPECIFICATION

(11) **EP 1 762 298 B1**
(45) Date of publication and mention of the grant of the patent: **18.01.2012**
(21) Application number: 06017640.1
(22) Date of filing: 24.08.2006
(51) Int. Cl.: B01J 19/00

(54) **Two-solution microreactor having sector-shaped grooves**
Mikroreaktor mit sektorgeformten Nuten für zwei Flüssigkeiten
Microreacteur à deux solutions ayant cannelures en forme de secteur

(30) Priority: 08.09.2005 JP 2005260032
(43) Date of publication of application: 14.03.2007
(73) Proprietor: Hitachi Plant Technologies, Ltd., Tokyo 101-0047 (JP)
(72) Inventor: Togashi, Shigenori, c/o Hitachi, Ltd., IPG, Chiyoda-ku, Tokyo 100-8220 (JP); Asano, Yukako, c/o Hitachi, Ltd., IPG, Chiyoda-ku, Tokyo 100-8220 (JP); Miyamoto, Tetsuro, c/o Hitachi, Ltd., IPG, Chiyoda-ku, Tokyo 100-8220 (JP); Kawamura, Tsutomu, c/o Hitachi, Ltd., IPG, Chiyoda-ku, Tokyo 100-8220 (JP); Oda, Masashi, c/o Hitachi, Ltd., IPG, Chiyoda-ku, Tokyo 100-8220 (JP)
(74) Representative: Strehl Schübel-Hopf & Partner

(56) References cited:
- WO-A-97/00125
- WO-A-99/58245
- WO-A-02/089965
- WO-A-2005/018786
- WO-A2-02/089962
- US-A- 5 887 977
- US-A1- 2003 082 079

## Description

### BACKGROUND OF THE INVENTION

### 1. Field of the Invention

The present invention relates to a micro-chemical reactor, and more particularly to a micro-chemical reactor using a micro reactor in which micro flow passages are formed for mixing or reaction of two different solutions.

### 2. Description of the Related Art

One example of known chemical reactors using micro reactors is disclosed in Patent Document 1 (JP,A 2004-148277). The micro reactor used in the disclosed chemical reactor is a micro reactor having a multilayered structure, which is obtained by improving a basic Y- or T-shaped micro reactor. More specifically, a plurality of flow passages are formed in such a spatial arrangement that a first solution and a second solution alternately flow on a flat plate in the order of the first solution, the second solution, the first solution, the second solution and so on in a repeated manner.

The basic Y- or T-shaped micro reactor is a micro reactor having the simplest shape. In such a micro reactor, the first solution and the second solution are caused to mix and react with each other through molecular diffusion. A mixing time is proportional to the square of a flow passage width in the micro reactor. The reaction is more efficiently progressed at a smaller flow passage width. In the micro reactor disclosed in Patent Document 1 which is an improved version of the basic micro reactor, a flow rate available for the reaction can be increased because of the multilayered structure.

Another example of the micro reactor is described in Non-Patent Document 1 (Hideharu Nagasawa, Nobuaki Aoki and Kazuhiro Mae, "Design of a New Micromixer for Instant Mixing Based on the Collision of Micro Segments", Chem. Eng. Technol., 28, pp. 324-331 (2005)). The micro reactor described in Non-Patent Document 1 can be called the center collision type. More specifically, the first solution and the second solution are supplied to flow from outer peripheral portions of flow passages, which are formed in a disk in the radial direction, toward a central portion such that the two solutions collide with each other in the central portion. The two solutions are more efficiently mixed with each other by the action of shearing forces caused upon the collision.

WO 97/00125 A discloses a flow cell with a single sector shaped flow channel for mixing substances. A further prior art example is described in WO 02/089962 A.

### SUMMARY OF THE INVENTION

In the two-solution micro-chemical reactor using the known basic Y- or T-shaped micro reactor, because the solution is flown through a micro flow passage formed in diameter of about several tens to several hundreds microns for the purpose of increasing the reaction efficiency, it is difficult to ensure a sufficient effective flow rate. The mixing performance and the pressure loss are in trade-off relation. In order to increase the mixing performance, therefore, the typical diameter of the micro flow passage is preferably set to be smaller. However, when the typical diameter of the micro flow passage is reduced, the pressure loss is increased in reverse proportion to fourth power of the typical diameter. Hence the flow resistance is increased, which leads to a difficulty in increasing the flow rate of the solution.

To solve such a problem, the micro-chemical reactor disclosed in Patent Document 1 employs the micro reactor having the multilayered structure. With that micro-chemical reactor, the solution can be flown at a larger flow rate, but another problem occurs in that the size of a flow passage chip is increased.

Further, the method described in Non-Patent Document 1 has the problem as follows. Because the mixing or reaction of two different solutions is performed only in the central portion of the disk and a reaction region is small in comparison with the total area of the micro reactor, the solution flow rate available for the reaction cannot be increased.

In view of the above-described problems with the related art, one object of the present invention is to develop reaction with high efficiency and to increase a solution flow rate available for the reaction in a two-solution chemical reactor using a micro reactor. Another object of the present invention is to reduce the size of the micro reactor while increasing the solution flow rate available for the reaction.

To achieve the above objects the micro-chemical reactor defined in claim 1 is provided.

The dependent claims relate to preferred embodiments. Preferably, the first introduction holes are arranged substantially on the same circumference, and the second introduction holes are arranged substantially on the same circumference having a larger diameter than the circumference on which the first introduction holes are arranged. Flow passages in which the second solution introduced through the second introduction holes flows straightforward may be formed on the outer peripheral side relative to the first introduction holes. The first introduction holes and the second introduction holes are preferably both formed in plural number in one flow-passage groove.

The flow-passage grooves are joined together at the other ends opposed to the one ends where the first and second introduction holes are formed so as to cause the first and second solutions to mix and react with each other while streams of the first and second solutions are gradually contracted.

According to an example useful to understand the present invention, a micro-chemical reactor comprises a substrate including a ring-shaped groove formed to extend from a central portion to an outer peripheral portion thereof and having a substantially constant depth, a plurality of first holes for supplying a first solution to the outer peripheral portion of the ring-shaped groove, and a plurality of second holes for supplying a second solution to the outer peripheral portion of the ring-shaped groove; and a unit for taking out the first and second solutions having mixed and reacted with each other through the central portion of the substrate, the first holes and the second holes being alternately arranged, the plurality of first holes and the plurality of second holes being arranged substantially on the same respective circumferences at substantially equal intervals.

A plurality of partition walls extending in the radial direction are provided in the ring-shaped groove to divide the ring-shaped groove into a plurality of sector-shaped grooves. The partition walls are provided to gradually reduce a flow passage width to become smaller in proportion to a distance from the central portion of the substrate. The partition walls may be provided such that volumes of the plurality of sector-shaped grooves are substantially equal to each other.

According to the present invention, in the micro reactor used in the two-solution chemical reactor, since it has a multilayered structure having the flow passages for the two solutions formed alternately in a disk such that the two solutions can be mixed with each other from a position near an outer periphery of the disk, it is possible to develop reaction between the two solutions with high efficiency and to increase a solution flow rate available for the reaction. Further, the size of the micro reactor can be reduced while increasing the solution flow rate available for the reaction.

### BRIEF DESCRIPTION OF THE DRAWINGS

Fig. 1 is a plan view of one example of a flow-passage groove substrate used in a micro reactor according to the present invention;
Fig. 2 is a detailed perspective view of one flow-passage groove region of the flow-passage groove substrate shown in Fig. 1;
Fig. 3 is a perspective view showing engagement between a flow-passage cover substrate and the flow-passage groove substrate shown in Fig. 1;
Fig. 4 is an exploded perspective view of one example of the micro reactor according to the present invention;
Fig. 5 is a perspective view of the micro reactor shown in Fig. 4;
Fig. 6 is a sectional view taken along the line A-A in Fig. 5;
Fig. 7 is a schematic view of one example of a micro-chemical reactor according to the present invention; and
Fig. 8 is an illustration for explaining streams in the flow-passage groove region of the micro reactor.

### DESCRIPTION OF THE PREFERRED EMBODIMENTS

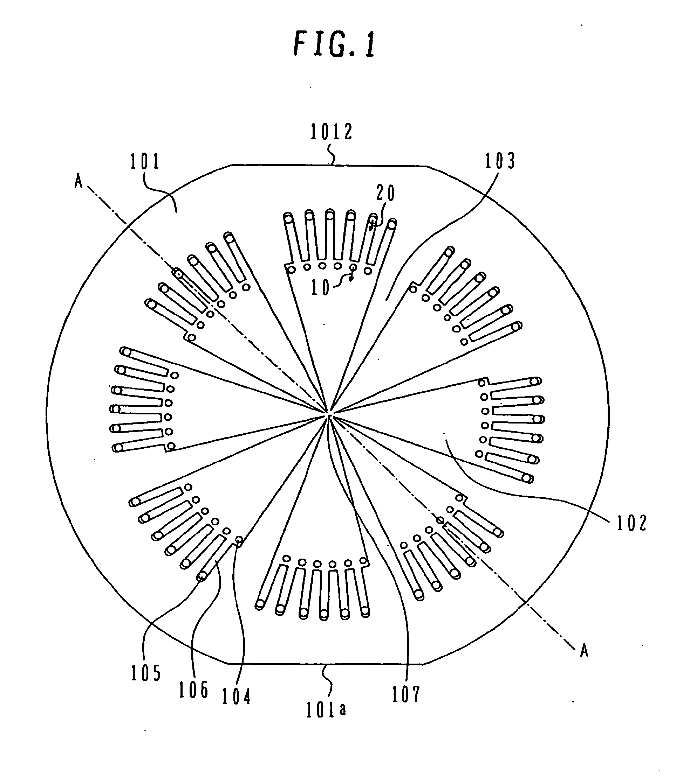

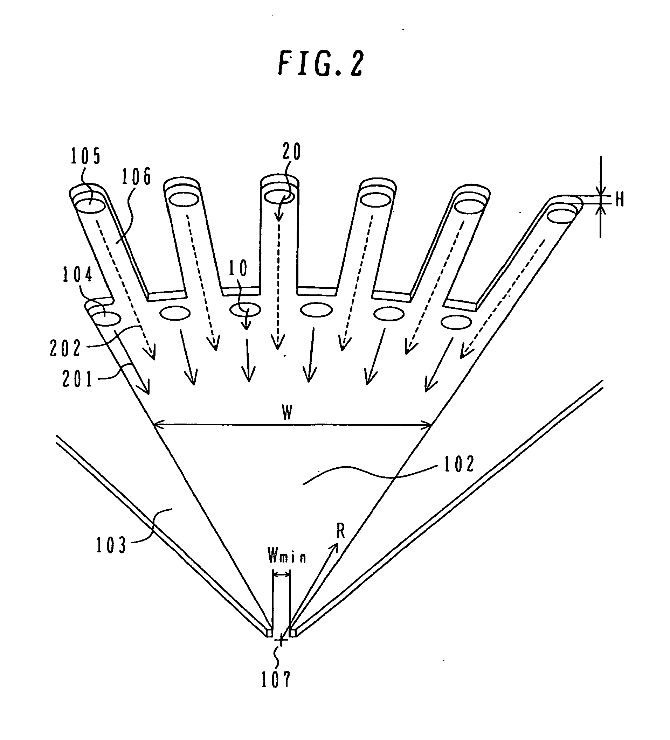

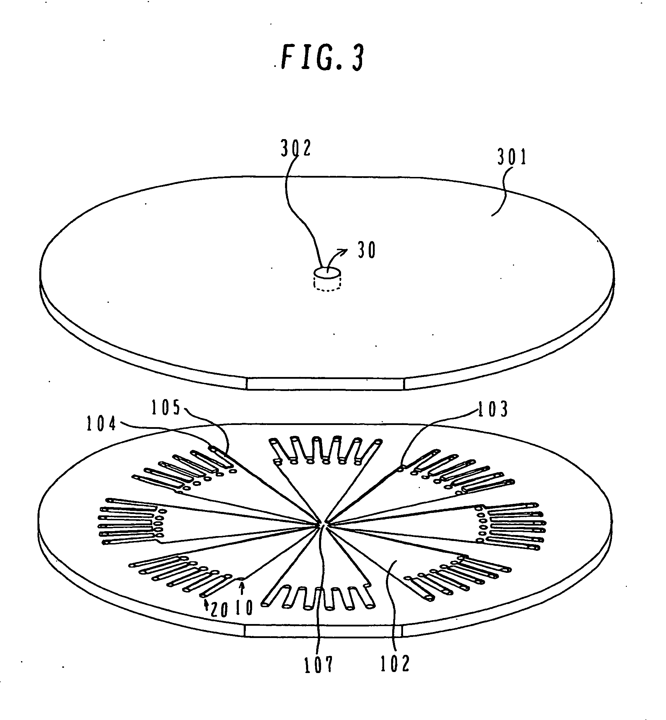

Several embodiments of a micro-chemical reactor according to the present invention will be described below with reference to the drawings. Fig. 1 is a plan view of one example of a flow-passage groove substrate 101 used in a micro reactor 400 or 701 of the micro-chemical reactor. Fig. 2 is a detailed perspective view of one sector-shaped groove 102 shown in Fig. 1. Fig. 3 is a perspective view showing the flow-passage groove substrate 101 and a flow-passage cover substrate 301 combined with the flow-passage groove substrate 101. At a center of the flow-passage cover substrate 301, an outlet hole 302 for a mixed/reacted solution is formed such that the solutions having mixed and/or reacted with each other in the sector-shaped groove 102 of the flow-passage groove substrate 101 are discharged through the outlet hole 302.

In the flow-passage groove substrate 101, cut portions 101a are formed at two diametrically opposite sides of a disk constituting the substrate 101. The cut portions 101a are used for positioning of the flow-passage groove substrate 101 when it is placed in the micro reactor 701. At each of plural positions (eight in the illustrated example) of the flow-passage groove substrate 101 in the circumferential direction, the sector-shaped groove 102 is formed to introduce first and second solutions 10, 20 so that those two solutions are mixed and reacted with each other therein. A partition wall 103 is provided between the adjacent sector-shaped grooves 102 and is extended up to a position corresponding to the periphery of a central pole portion of the disk. Along an outer edge of the sector-shaped groove 102, a plurality (six in the illustrated example) of branched inlet holes 104 are formed at intervals in the circumferential direction to introduce the first solution 10 into the sector-shaped groove 102. Each of the branched inlet holes 104 penetrates until reaching a rear surface of the flow-passage groove substrate 101 as viewed in the drawing.

From the outer edge of the sector-shaped groove 102, a plurality (six in the illustrated example) of second-solution flow passages 106 are formed like the spokes of a wheel to extend outward in the radial direction to introduce the second solution 20. At the outer edge of each of the second solution flow passages 106, a branched inlet hole 105 for introducing the second solution 20 is formed to penetrate until reaching the rear surface of the flow-passage groove substrate 101 as viewed in the drawing. Each second solution flow passage 106 is positioned between the adjacent branched inlet holes 104 for the first solution 10 in the circumferential direction. Inner central ends of the sector-shaped grooves 102 connected to one another to form a central joining area 107. Accordingly, the first and second solutions 10, 20 introduced from an outer peripheral area are moved through the sector-shaped groove 102 in the direction from the outer side toward the inner side. During the movement, the first and second solutions 10, 20 are mixed and reacted with each other, followed by flowing out through the central joining area 107.

Fig. 2 shows details of the sector-shaped groove 102. While Fig. 2 shows only one sector-shaped groove 102, the other sector-shaped grooves 102 are each also formed substantially in the same manner. More specifically, the sector-shaped groove 102 having a depth H of about 150 µm is formed by etching, for example, at eight positions spaced in the circumferential direction of the flow-passage groove substrate 101 which is formed by partly cutting the two diametrically opposite sides of a disk-like substrate made of, e.g., glass or stainless. In the sector-shaped groove 102, its circumferential width is most narrowed at an outlet portion connected to the central joining area 107. The most narrowed outlet portion has a flow passage width Wmin of about 300 µm.

Streams of the first and second solutions 10, 20 in spaces formed by the flow-passage groove substrate 101 and the flow-passage cover substrate 301 will be described below with reference to Figs. 1-3. In one sector-shaped groove 102 formed in the flow-passage groove substrate 101, six branched inlet holes 104 for the first solution 10 are formed in diameter of about 500 µm. Similarly, six branched inlet holes 105 for the second solution 20 are formed in diameter of about 500 µm.

The first solution 10 flows into each branched inlet hole 104 from the rear surface side of the flow-passage groove substrate 101 and then into the sector-shaped groove 102 through the branched inlet hole 104. The second solution 20 also flows into each branched inlet hole 105 from the rear surface side of the flow-passage groove substrate 101. Thereafter, the second solution 20 flows through the second-solution flow passage 106, which has a width of 500 µm substantially equal to the diameter of the branched inlet hole 105, over the distance of about 4 mm and then flows into the sector-shaped groove 102. Thus, six pairs of streams 201 of the first solution 10 and streams 202 of the second solution 20 are formed in one sector-shaped groove 102. Those six pairs of the first and second solutions form solution streams in a circumferentially multilayered state. Those multilayered streams are gradually contracted while flowing through the sector-shaped groove 102 toward the central joining area 107.

On the other hand, the flow passage width W of the sector-shaped groove 102 is gradually narrowed to become smaller along the direction of the solution streams in proportion to a distance R from the center of the central joining area 107. Because such gradual narrowing avoids abrupt reduction of the flow passage, a pressure loss of the first and second solutions 10, 20 flowing through the sector-shaped groove 102 is very small. As a result, the narrowest flow passage width Wmin can be reduced to about 300 µm. This means that the flow passage width of each of the multilayered solution streams just before reaching the central joining area 107 is about 300 µm/12 (passages) = about 25 µm in average per solution stream, and therefore the flow passage width of each of the two solutions 10 and 20 is contracted from 500 µm to about 25 µm with substantially no pressure loss. In that condition, the first and second solutions are mixed with each other in a short time through only molecular diffusion.

Because eight sector-shaped grooves 102 are formed in the flow-passage groove substrate 101, the solution streams are generated in number of 12 (passages) x 8 = 96 in the central joining area 107. In practice, however, since the first and second solutions are mixed with each other in the sector-shaped grooves 102 through molecular diffusion, the solution streams containing the mixed solutions and not-yet mixed solutions flow into the central joining area 107 in the multilayered state. A proportion of the solutions remaining not mixed changes depending on the kinds of the solutions used and the environment. In many cases, the mixing and reaction of the first and second solutions 10, 20 are progressed before entering the central joining area 107 and come into an almost fully mixed state. A mixed/reacted solution 30 after the progress of the mixing and reaction of the two solutions flows from the central joining area 107 into the outlet hole 302 formed in the flow-passage cover substrate 301 and is discharged to the exterior.

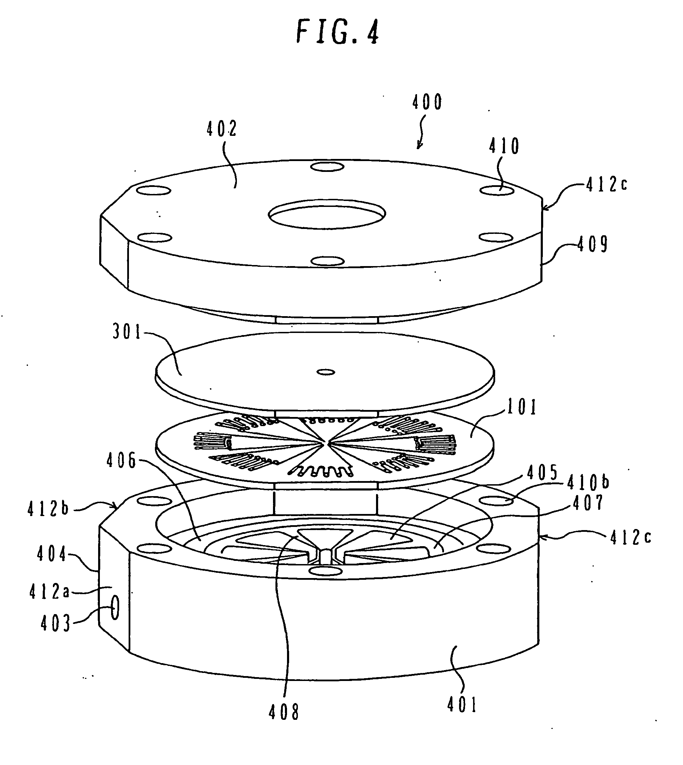

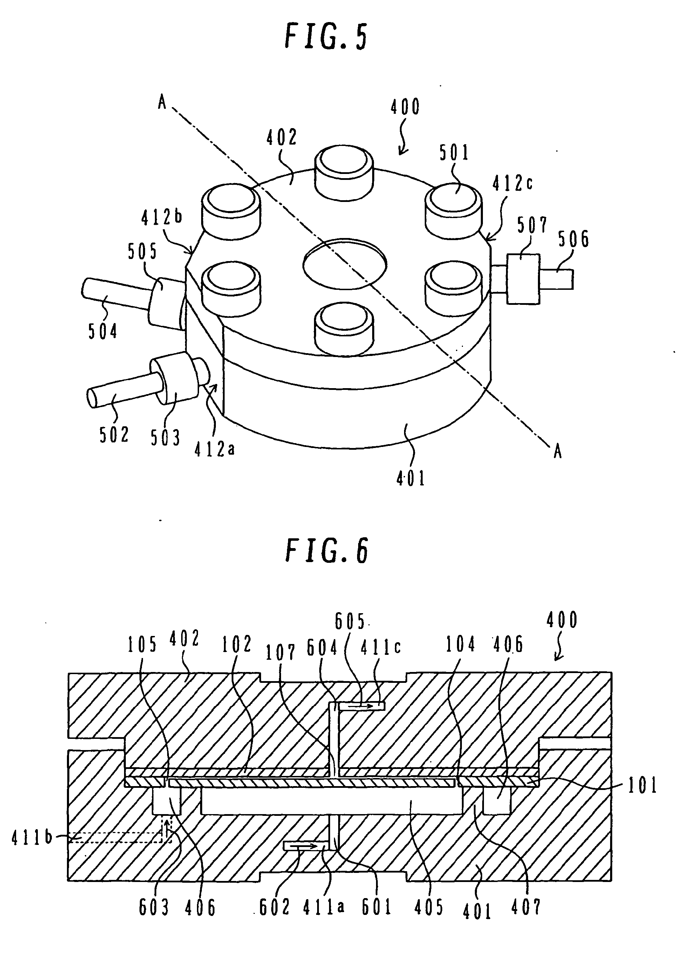

One example of the micro reactor 400 containing the thus-constructed flow-passage cover substrate 301 and flow-passage groove substrate 101 will be described below with reference to Figs. 4-6. Fig. 4 is an exploded perspective view of the micro reactor 400, Fig. 5 is a perspective view of the micro reactor 400, and Fig. 6 is a vertical sectional view of the micro reactor 400 taken along the line A-A in Fig. 5.

As shown in Figs. 4 and 6, the micro reactor 400 comprises an inlet housing member 401 arranged on the lower side and having a recess formed at its center, and an outlet housing member 402 arranged on the upper side and having a projection fitted to the recess of the inlet housing member 401. Within the recess of the inlet housing member 401, the flow-passage groove substrate 101 and the flow-passage cover substrate 301 are placed in this order from the lower side. The recess of the inlet housing member 401 has a columnar shape partly cut at the diametrically opposite sides for positioning of the flow-passage groove substrate 101 and the flow-passage cover substrate 301 in the circumferential direction.

In a central surface area of the recess of the inlet housing member 401, first-solution pools 405 each having substantially the same shape as the sector-shaped groove 102 are formed at intervals in the circumferential direction at positions corresponding to the sector-shaped grooves 102 formed in the flow-passage groove substrate 101. A sector-shaped support bank 408 is formed between the adjacent first-solution pools 405. Around the first-solution pools 405, a ring-shaped second-solution pool 406 is formed with a partition bank 407 provided therebetween for separating the first solution 10 and the second solution 20. Each of the first- and second-solution pools 405, 406 has a depth sufficiently larger than the thickness of the flow-passage groove substrate 101 and the flow-passage cover substrate 301.

The first-solution pool 405 has an outer periphery positioned on the outer side of the branched inlet holes 104 for the first solution and on the inner side of the branched inlet holes 105 for the second solution in the radial direction. The second-solution pool 406 has an inner periphery positioned on the outer side of the branched inlet holes 104 for the first solution and an outer periphery on the outer side of the branched inlet holes 105 for the second solution in the radial direction.

At a central portion of the inlet housing member 401, a not-penetrating hole 601 is formed to extend downward from the upper surface side at a position corresponding to the central joining area 107 of the flow-passage groove substrate 101. The inlet housing member 401 has a shape obtained by partly cutting a disk at plural positions in the circumferential direction. A horizontal hole 411a is formed in one 412a of cut surfaces 412a-412c formed by cutting the disk and is communicated with the not-penetrating hole 601. Those holes 411a and 601 define an inlet passage for the first solution 10.

Similarly, in the second-solution pool 406, a not-penetrating hole 603 is formed to extend downward from the upper surface side of the inlet housing member 401. The not-penetrating hole 603 is communicated with a horizontal hole 411b which is formed to horizontally extend toward the center of the inlet housing member 401 from the cut surface 412b positioned adjacent to the cut surface 412a. Those holes 603 and 411b define an inlet passage for the second solution 20.

At a central portion of the outlet housing member 402, a not-penetrating hole 604 is formed to extend upward from the lower surface side. The not-penetrating hole 604 is communicated with a horizontal hole 411c which is formed to horizontally extend toward the center of the outlet housing member 402 from the cut surface 412c positioned substantially diametrically opposite to the cut surfaces 412a and 412b. Those holes 604 and 411c define an outlet passage for the mixed/reacted solution 30 in combination with the outlet hole 302 for the mixed/reacted solution which is formed in the flow-passage cover substrate 301.

Near an outer periphery of the outlet housing member 402, a plurality of bolt holes 410 are formed at intervals in the circumferential direction to fix the outlet housing member 402 and the inlet housing member 401 in place by using bolts 501 after assembly of both the members. Screwed holes 410b are formed in the inlet housing member 401 at positions corresponding to the bolt holes 410.

As shown in Fig. 5, a coupling 503 is attached to an inlet portion 403 of the horizontal hole 411a for the first solution 10. A tube 502 is connectable to the coupling 503 for introducing the first solution 10 to the micro reactor 400. Similarly, a coupling 505 is attached to an inlet portion 404 of the horizontal hole 411b for the second solution 20. A tube 504 is connectable to the coupling 505 for introducing the second solution 20 to the micro reactor 400. A coupling 507 is attached to an outlet portion 409 of the horizontal hole 411c for the mixed/reacted solution 30. A tube 506 is connectable to the coupling 507 such that the solutions having mixed and reacted with each other in the flow-passage groove substrate 101 can be discharged to the exterior.

In the micro reactor 400 thus constructed, the first solution 10 held outside the micro reactor 400 flows into the not-penetrating hole 601 (see Fig. 6) through the inlet portion 403 for the first solution 10, and it is introduced to the pools 405 for the first solution 10 which are positioned in the central area of the inlet housing member 401. Thereafter, the first solution 10 is branched into a number 48 of streams through the branched inlet holes 104 for the first solution 10 and flows into the central joining area 107.

In parallel, the second solution 20 held outside the micro reactor 400 is introduced to the second-solution pool 406 through the inlet portion 404 for the second solution 20. Thereafter, the second solution 20 is branched into a number 48 of streams through the branched inlet holes 105 for the second solution 20 and flows into the central joining area 107. The first solution 10 and the second solution 20 flowing into the central joining area 107 are mixed and reacted with each other, as described above, in the sector-shaped grooves 102 formed in the flow-passage groove substrate 101, and become the mixed/reacted solution 30.

The mixed/reacted solution 30 flows from the central joining area 107 through the outlet hole 302 formed in the flow-passage cover substrate 301 and further flows through the not-penetrating hole 604 (see Fig. 6) for the mixed/reacted solution 30 upward in the vertical direction. Thereafter, the mixed/reacted solution 30 changes its flow direction by 90° to flow in the horizontal direction and is discharged to the exterior of the micro reactor 400 through the outlet portion 409 for the mixed/reacted solution 30 which is formed in the outlet housing member 402.

Contact surfaces of the flow-passage groove substrate 101, the flow-passage cover substrate 301, the inlet housing member 401, and the outlet housing member 402, shown in Fig. 4, are mirror-finished. Those components 101, 301, 401 and 402 are brought into a pressure contact state by screwing the bolts 501 to fasten the inlet housing member 401 and the outlet housing member 402 together. Positive sealing is thus ensured. The method for bringing the flow-passage groove substrate 101 and the flow-passage cover substrate 301 into the pressure contact state can be changed depending on not only materials used as the flow-passage groove substrate 101 and the flow-passage cover substrate 301, but also the pressure applied to the micro reactor 400. In other words, positive sealing can also be ensured by fusion welding when the substrates are made of glass, or by diffusion bonding when the substrates are made of metals.

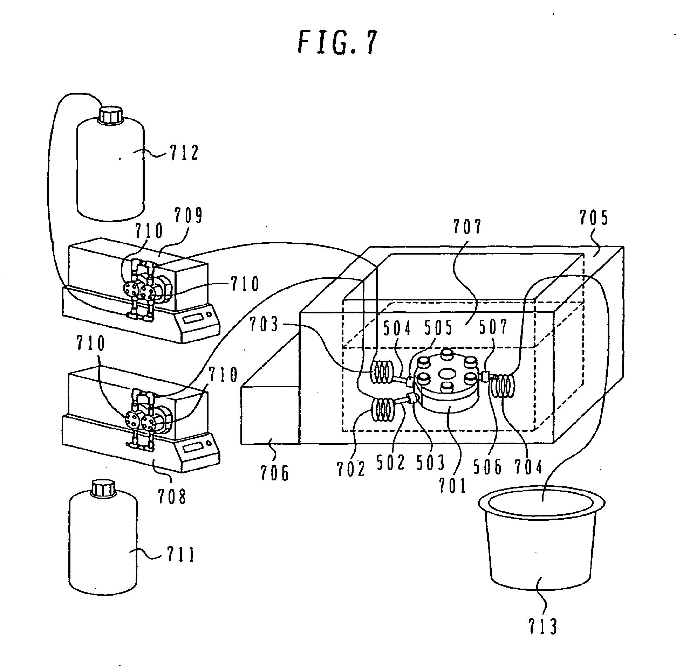

Fig. 7 schematically shows one example of an experiment system using a micro reactor 701 having the same structure as the micro reactor 400. In the micro reactor 701, the tube 502 is connected to the coupling 503 for introducing the first solution 10. Midway the tube 502, a preheater 702 in the form of a coil is disposed to heat the first solution 10 flowing through the tube 502. Similarly, the tube 504 is connected to the coupling 505 for introducing the second solution 20. Midway the tube 504, a preheater 703 in the form of a coil is disposed to heat the second solution 20 flowing through the tube 504. Further, the tube 506 is connected to the coupling 507 for discharging the mixed/reacted solution 30 from the micro reactor 701. A reaction time adjuster 704 in the form of a coil is disposed midway the tube 506.

The micro reactor 701, the preheaters 702 and 703, and the reaction time adjuster 704 are all contained in a thermostatic water bath 705. A water temperature adjuster 706 is disposed in the thermostatic water bath 705 such that water (liquid) in the thermostatic water bath 705 is always adjusted to a predetermined temperature by using a heating or cooling source (not shown). The amount of water in the thermostatic water bath 705 is adjusted such that the micro reactor 701 is entirely kept immersed in the water, while a liquid level 707 in the thermostatic water bath 705 is monitored.

The tube 502 is connected to a feed pump 708, e.g., a syringe pump, disposed outside the thermostatic water bath 705 for feeding the first solution 10 to the micro reactor 701. The feed pump 708 is also connected to a first-solution tank 711 through a tube. Similarly, the tube 504 is connected to a feed pump 709, e.g., a syringe pump, disposed outside the thermostatic water bath 705 for feeding the second solution 20 to the micro reactor 701. The feed pump 709 is also connected to a second-solution tank 712 through a tube. Each of the feed pumps 708 and 709 includes two plungers 710. The operation timing of each plunger 710 is adjusted so as to reduce pulsation.

The mixed/reacted solution generated in the micro reactor 701 passes through the reaction time adjuster 704, and it is then introduced to a tank 713 disposed outside the thermostatic water bath 705 through a tube. With the experiment system of Fig. 7, experiments of various chemical reaction systems can be conducted by selecting, for example, the kinds and concentrations of the first and second solutions 10, 20. Depending on the chemical reaction system selected for the experiment, the temperature of the thermostatic water bath 705, solution delivery rates of the feed pumps 708 and 709, etc. are controlled by a control unit (not shown).

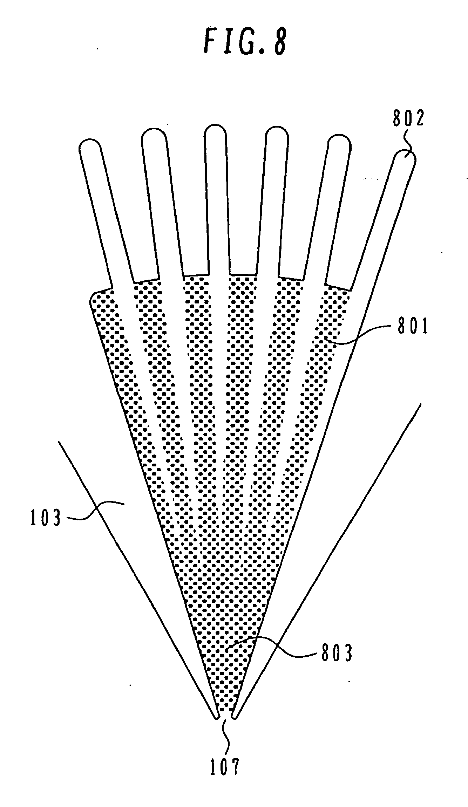

Fig. 8 illustrates one example of a flow condition in the micro reactor 701 when the experiment was made using the experiment system shown in Fig. 7. In the sector-shaped groove 102, a laminar stream 801 (indicated by a hatched area) of the first solution 10 and a laminar stream 802 (indicated by a white or blank area) of the second solution 20 flow in a circumferentially multilayered state toward the central joining area 107 in the form of a contracting stream with the stream width being gradually reduced. As the first solution 10 and the second solution 20 come closer to the central joining area 107, those solutions start mixing and/or reaction from opposite lateral edges of each stream in the widthwise direction. At a point 803 fairly upstream of the central joining area 107, the first solution 10 and the second solution 20 are already mixed and reacted with each other in the whole of streams. Accordingly, the mixing and/or the reaction is progressed with high efficiency.

While the sector-shaped groove is employed in the above-described example, the present invention is not limited to the use of the sector-shaped groove so long as a structure allows the first solution and the second solution to mix with each other at widthwise lateral edges of adjacent streams in a direction perpendicular to the flow direction of the solutions. For example, the groove may be in the form of a bell or a trumpet such that the stream width is narrowed to a larger extent midway the stream. In such a case, due care has also to be paid so as to prevent an increase of the flow passage and abrupt contraction of the stream.

Also, while eight sector-shaped grooves are formed, the number of the sector-shaped grooves can be optionally changed depending on the size of the micro reactor and the properties and reaction conditions of the first and second solutions. For example, when the two solutions are reacted with each other under a condition of comparatively low pressure, a load imposed on each support bank provided corresponding to the gap between the adjacent sector-shaped grooves is reduced, and therefore an area proportion of the sector-shaped grooves can be increased by reducing an area proportion of the support banks. Further, while the illustrated example is described as setting, to 500 µm, the diameter of each branched inlet hole and the width of the flow passage extending from the branched inlet hole, which are deeply related to the width of the laminar streams of the first and second solutions, the present invention is not limited to such a value. The diameter of each branched inlet hole and the width of the flow passage are preferably reduced as small as possible to such an extent that the flow resistance of the first and second solutions is negligible. The reduction in the width of the flow passage is advantageous in increasing uniformity of the mixing and/or the reaction between the first and second solutions at earlier timing, realizing more effective mixing and/or reaction, and reducing the overall size of the micro reactor. While the above example is illustrated as forming six branched inlet holes for each of the first and second solutions, i.e., twelve branched inlet holes, in on sector-shaped groove, the number of the branched inlet holes can be optionally changed depending on the properties of the first and second solutions, etc. as mentioned above.

According to the present invention, as described above, a two-solution micro-chemical reactor using a micro reactor is constructed to have not only a multilayered structure in which flow passages of two solutions are arranged alternately in the circumferential direction, but also a flow-passage groove structure in which the width of each flow passage is gradually narrowed to become smaller in proportion to the distance R from the substrate center. As a result, a pressure loss can be kept small even with a flow passage chip having a smaller size, and a flow rate of the solution to be treated can be increased in comparison with that obtained with the known structure.

## Claims

1. A micro-chemical reactor comprising:
a first substrate (101) including
first introduction holes (104) and second introduction holes (105) being formed alternately in the circumferential direction of said first substrate (101), said first introduction holes (104) introducing a first solution (10), said second introduction holes (105) introducing a second solution (20),
a plurality of sector-shaped flow-passage grooves (102) formed at intervals in the circumferential direction of said first substrate (101) and including said first and second introduction holes (104, 105) at a first end thereof, wherein the flow passage width (W) is formed to gradually reduce in proportion to a distance (R) from the central portion of said first substrate (101), and said flow-passage grooves (102) are joined together at their second ends (107), and
a plurality of partition walls (103) each being provided between two adjacent ones of said flow-passage grooves (102) and extending in the radial direction of said first substrate (101) up to a position corresponding to the periphery of a center hole portion of the first substrate (101);
a second substrate (301) enclosing the flow-passage grooves (102) of said first substrate (101), a discharge hole (302) being formed at a center portion of said second substrate (301) corresponding to the second ends (107) of the flow-passage grooves (102); and
an inlet housing member (401) arranged below said first substrate (101) and having a plurality of first solution pools (405) and a second solution pool (406) adapted to supply the first and second introduction holes (104, 105) with said first and second solutions (10, 20), respectively,
wherein said first solution pools (405) each have substantially the same shape as the sector-shaped grooves (102) and are formed at intervals in said circumferential direction at positions corresponding to the sector-shaped grooves (102) with a sector-shaped support bank (408) provided between the adjacent first solution pools (405),
wherein said second solution pool (406) is ring-shaped and formed around the first solution pools (405) with a partition bank (407) provided therebetween for separating the first solution (10) and the second solution (20), and
wherein each of the first and second solution pools (405, 406) has a depth sufficiently larger than the thickness of the first substrate (101) and the second substrate (301).

2. The micro-chemical reactor of claim 1, wherein said first introduction holes (104) are arranged substantially on the same circumference, and said second introduction holes (105) are arranged substantially on the same circumference having a larger diameter than that of the circumference on which said first introduction holes (104) are arranged.

3. The micro-chemical reactor of claim 2, wherein flow passages in which the second solution (20) introduced through said second introduction holes (105) flows straightforward are formed on the outer peripheral side relative to said first introduction holes (104).

4. The micro-chemical reactor of claim 1, wherein said first introduction holes (104) and said second introduction holes (105) are both formed in plural number in one flow-passage groove (102).

5. The micro-chemical reactor of any preceding claim, wherein said flow-passage grooves (102) have a substantially constant depth (H).

6. The micro-chemical reactor of any preceding claim, wherein said partition walls (103) are provided such that the volumes of said sector-shaped grooves (102) are substantially equal to each other.

## Patentansprüche

1. Mikrochemiereaktor mit
einem ersten Substrat (101), das aufweist:
erste Einfuhrlöcher (104) und zweite Einfuhrlöcher (105), die alternierend in der Umfangsrichtung des ersten Substrats (101) gebildet sind, wobei die ersten Einfuhrlöcher (104) eine erste Lösung (10) und die zweiten Einfuhrlöcher (105) eine zweite Lösung (20) einführen;
mehrere sektorförmige Strömungspassagen-Vertiefungen (102), die in Abständen in der Umfangsrichtung des ersten Substrats (101) gebildet sind und die ersten und die zweiten Einfuhrlöcher (104, 105) an ihrem ersten Ende aufweisen, wobei die Strömungspassagenbreite (W) so ausgebildet ist, dass sie graduell in Proportion zu einem Abstand (R) von dem Mittelabschnitt des ersten Substrats (101) abnimmt, und die Strömungspassagen-Vertiefungen (102) an den zweiten Enden (107) zusammengeführt werden; und
mehrere Trennwände (103), die jeweils zwischen zwei benachbarten Strömungspassagen-Vertiefungen (102) vorgesehen sind und in der radialen Richtung des ersten Substrats (101) bis zu einer Position verlaufen, die dem Umfang eines Mittellochabschnitts des ersten Substrats (101) entspricht,
einem zweiten Substrat (301), das die Strömungspassagen-Vertiefungen (102) des ersten Substrats (101) einfasst, wobei ein Ausgabeloch (302) an einem Mittelabschnitt des zweiten Substrats (301) gebildet ist, der den zweiten Enden (107) der Strömungspassagen-Vertiefungen (102) entspricht, und
einem Einlassgehäuseelement (401), das unterhalb des ersten Substrats (101) angeordnet ist und mehrere erste Lösungsbehälter (405) und einen zweiten Lösungsbehälter (406) aufweist, die dazu ausgelegt sind, die ersten und die zweiten Einfuhrlöcher (104, 105) jeweils mit der ersten bzw. der zweiten Lösung (10, 20) zu versorgen,
wobei die ersten Lösungsbehälter (405) jeweils im Wesentlichen die gleiche Form wie die sektorförmigen Vertiefungen (102) haben und in Abständen in der Umfangsrichtung an Positionen gebildet sind, die den sektorförmigen Vertiefungen (102) entsprechen, wobei eine sektorförmige Stützstruktur (408) zwischen den angrenzenden ersten Lösungsbehältern (405) vorgesehen ist,
wobei der zweite Lösungsbehälter (406) ringförmig ist und die ersten Lösungsbehälter (405) mit einer Trennstruktur (407) dazwischen gebildet sind, um die erste Lösung (10) und die zweite Lösung (20) zu trennen, und
wobei der erste und der zweite Lösungsbehälter (405, 406) jeweils eine Tiefe aufweisen, die ausreichend größer ist als die Dicke des ersten Substrats (101) und des zweiten Substrats (301).

2. Mikrochemiereaktor nach Anspruch 1, wobei die ersten Einfuhrlöcher (104) im Wesentlichen auf dem gleichen Umfang angeordnet sind, und die zweiten Einfuhrlöcher (105) im Wesentlichen auf dem gleichen Umfang mit einem Durchmesser angeordnet sind, der größer ist als der des Umfangs, auf dem die ersten Einfuhrlöcher (104) angeordnet sind.

3. Mikrochemiereaktor nach Anspruch 2, wobei Strömungspassagen, in denen die durch die zweiten Einfuhrlöcher (105) eingeführte zweite Lösung (20) geradeaus strömt, auf der äußeren Umfangsseite relativ zu den ersten Einfuhrlöchern (104) gebildet sind.

4. Mikrochemiereaktor nach Anspruch 1, wobei die ersten Einfuhrlöcher (104) und die zweiten Einfuhrlöcher (105) beide mehrfach in einer Strömungspassagen-Vertiefung (102) gebildet sind.

5. Mikrochemiereaktor nach einem der vorstehenden Ansprüche, wobei die Strömungspassagen-Vertiefungen (102) eine im Wesentlichen konstante Tiefe (H) aufweisen.

6. Mikrochemiereaktor nach einem der vorstehenden Ansprüche, wobei die Trennwände (103) so vorgesehen sind, dass die Volumina der sektorförmigen Vertiefungen (102) im Wesentlichen gleich groß sind.

## Revendications

1. Microréacteur chimique comportant :
un premier substrat (101) incluant
des premiers trous d'introduction (104) et des seconds trous d'introduction (105) étant formés alternativement dans la direction circonférentielle dudit premier substrat (101), lesdits premiers trous d'introduction (104) introduisant une première solution (10), lesdits seconds trous d'introduction (105) introduisant une seconde solution (20),
une pluralité de cannelures de passage d'écoulement en forme de secteur (102) formées selon des intervalles dans la direction circonférentielle dudit premier substrat (101) et incluant lesdits premiers et seconds trous d'introduction (104, 105) au niveau d'une première extrémité correspondante, dans lequel la largeur du passage d'écoulement (W) est formée pour se réduire graduellement proportionnellement à une distance (R) par rapport à la partie centrale dudit premier substrat (101) et lesdites cannelures de passage d'écoulement (102) sont reliées ensemble au niveau de leurs secondes extrémités (107), et
une pluralité de parois de partition (103) chacune étant agencée entre deux cannelures adjacentes parmi lesdites cannelures de passage d'écoulement (102) et s'étendant dans la direction radiale dudit premier substrat (101) jusqu'à une position correspondant la périphérie d'une partie de trou central du premier substrat (101),
un second substrat (301) entourant les cannelures de passage d'écoulement (102) dudit premier substrat (101), un trou d'évacuation (302) étant formé au niveau d'un partie centrale dudit second substrat (301) correspondant aux secondes extrémités (107) des cannelures de passage d'écoulement (102), et
un élément de boîtier d'admission (401) agencé au-dessous dudit premier substrat (101) et ayant une pluralité de premiers groupes de solutions (405) et d'un second groupe de solutions (406) adaptés pour fournir auxdits premiers et seconds trous d'introduction (104, 105) lesdites premières et secondes solutions (10, 20), respectivement,
dans lequel lesdits premiers groupes de solutions (405) ont tous sensiblement la même forme que les cannelures en forme de secteur (102) et sont formés selon des intervalles dans ladite direction circonférentielle à des positions qui correspondent aux cannelures en forme de secteur (102) avec une banque de support en forme de secteur (408) agencée entre les premiers groupes de solutions adjacents (405),
dans lequel ledit second groupe de solutions (406) est en forme d'anneau et est formé autour des premiers groupes de solutions (405) avec une banque de partition (407) agencée entre eux pour séparer la première solution (10) et la seconde solution (20), et
dans lequel chacun des premiers et seconds groupes de solutions (405, 406) a une profondeur supérieure de manière suffisante à l'épaisseur du premier substrat (101) et du second substrat (301).

2. Microréacteur chimique selon la revendication 1, dans lequel lesdits premiers trous d'introduction (104) sont agencés sensiblement sur la même circonférence, et lesdits seconds trous d'introduction (105) sont agencés sensiblement sur la même circonférence ayant un diamètre supérieur à celui de la circonférence sur lequel lesdits premiers trous d'introduction (104) sont agencés.

3. Microréacteur chimique selon la revendication 2, dans lequel des passages d'écoulement dans lesquels la seconde solution (20) introduite via lesdits seconds trous d'introduction (105) circule de manière directe sont formés sur le côté périphérique extérieur par rapport auxdits premiers trous d'introduction (104).

4. Microréacteur chimique selon la revendication 1, dans lequel lesdits premiers trous d'introduction (104) et lesdits seconds trous d'introduction (105) sont tous les deux formés en nombre dans une cannelure de passage d'écoulement (102).

5. Microréacteur chimique selon l'une quelconque des revendications précédentes, dans lequel lesdites cannelures de passage d'écoulement (102) ont une profondeur sensiblement constante (H).

6. Microréacteur chimique selon l'une quelconque de revendications précédentes, dans lequel lesdites parois de partition (103) sont agencées de sorte que les volumes desdites cannelures en forme de secteur (102) sont sensiblement égaux entre eux.
